# EUROPEAN PATENT APPLICATION

(11) **EP 0 624 443 A1**
(43) Date of publication of application: **17.11.1994**
(21) Application number: 94107217.5
(22) Date of filing: 09.05.1994
(51) Int. Cl.: B29B 13/06, F26B 21/08, F26B 21/02

(54) **Dehumidifier for plastic materials in granules**

(30) Priority: 11.05.1993 IT PD930109
(71) Applicant: MORETTO P.A. S.r.l., I-35010 Massanzago, Padova (IT)
(72) Inventor: Moretto, Renato, I-35010 Massanzago, Padova (IT)
(74) Representative: Modiano, Guido, Dr.-Ing.

(57) **Abstract**

The present invention relates to a dehumidifier for plastic materials (11) in granules that comprises a container (12) for molecular sieves through which the moist air that arrives from a container (10) of plastic granules (11) must pass. The molecular sieves are arranged inside the container (12) along a ring (14) through which the air flows axially.

## Description

The present invention relates to a dehumidifier for plastic materials in granules.

As it is known, one of the negative characteristics of plastic materials in granules is that they absorb moisture, accumulate it and contain it in their structures.

This is a drawback for the subsequent steps for converting the granules into parts or extruded items.

The moisture contained in the granules in fact unavoidably condenses on the walls of the mold, producing surface streaks that cause the rejection of the freshly transformed item.

In industrial polymers, during injection or extrusion the uniformly distributed moisture concentrates in pockets, ridges, chokes or reinforcements, which are thus altered in their molecular structure.

Consequently, a considerable reduction of mechanical strength occurs due to the breakage of the bonds among the molecules.

In order to obviate these drawbacks, dehumidifiers have been known for several years that are based on the principle of filtering air through so-called "molecular sieves".

The treated air has an extremely low moisture content, and when it is made to flow through the container of the plastic granules it can absorb their water until it saturates.

Subsequent flow of the air through the molecular sieves transfers the moisture to the sieves.

A closed circuit is thus formed that operates until the sieves are saturated.

Accordingly, it is necessary to rid the molecular sieves of the absorbed water, in order to make them active again, by heating them to a high temperature.

During this step, dehumidifiers do not perform their functions.

Accordingly, dehumidifiers are generally provided with two containers for molecular sieves which work alternately so as to avoid downtimes for the reactivation of one sieve or the other.

These dehumidifiers are termed "twin-tower dehumidifiers" due to the presence of the two molecular sieve containers.

The process that uses molecular sieves is rather complicated, and therefore expensive, in production as well as in operation.

Accordingly there is the need to obtain compact dehumidifiers that can have a satisfactory efficiency, small productions, modest consumptions and reasonable investment costs.

Single-tower dehumidifiers have thus been produced that suspend their dehumidification work during the regeneration step.

A principal aim of the present invention is to provide a dehumidifier for plastic materials in granules of the single-tower type in which the step for regenerating the molecular sieves occurs in a very short time.

A consequent primary object is to provide a dehumidifier that has a better efficiency than current ones.

Another object is to provide a dehumidifier with limited production and operating costs.

A further object is to provide a dehumidifier that has a limited consumption.

With this aim, these objects and others in view, which will become apparent hereinafter, there is provided, according to the present invention, a dehumidifier for plastic materials in granules that comprises a container for molecular sieves through which the moist air arriving from a container of plastic granules must pass, characterized in that said molecular sieves are arranged along a ring through which the air flows axially.

Further characteristics and advantages of the invention will become apparent from the following detailed description of a preferred embodiment thereof, illustrated only by way of non-limitative example in the accompanying drawings, wherein:
figure 1 is a diagram of the dehumidifier according to the invention;
figure 2 is an enlarged-scale detail view of the container for the molecular sieves and of a distribution unit;
figure 3 is an enlarged-scale detail view of the distribution unit of figure 2.

With reference to the above figures, a dehumidifier for plastic materials in granules includes a cylindrical container 12 which is closed at its ends and is connected, as described in detail hereinafter, to a hopper 10 containing granules 11 of plastic material; a coaxial cup-like element 13 is located inside the container and forms, on its outside, a region filled with molecular sieves.

This region, which is cross-hatched in the figures, comprises an annular portion 14 and a bottom 15 and is delimited at the top by an annular partition 16 and downward by a grille 17.

Said annular portion 14 is conveniently 30-40 mm wide in cross-section.

An annular grille 18 that extends axially is arranged between the upper end of the cup-like element 13 and the annular partition 16.

Both grilles 17 and 18 are made of net.

The bottom grille 17 is pushed by springs 19 so that it compresses the molecular sieves.

The grille 17 is guided by rods 21 that pass through the region 14 and are fixed to the annular partition 16.

A tubular element 22 extends inside the cup-like element 13, is coaxial thereto and contains an appropriately powered electric resistor 23.

The tubular element 22 is externally thermally insulated.

A duct 24 is connected to the inside of the tubular element 22, and a duct 25 is connected to the inside of the bottom of the container 12 below the grille 17.

A distribution unit 26 is arranged between said hopper 10 and the container 12 and has a cylindrical element 27 that is closed at its ends and in which a rod 28 is arranged axially; said rod supports three spaced disk-like shutters 29 and is associated with a pneumatic actuation cylinder 30.

Each one of the three shutters 29 can thus move between pairs of annular elements 31 which are fixed to the inner wall of the cylindrical element 27 and divide it into seven regions designated by the reference numerals 32 to 38 in the figures.

The shutters 29 close the passage between the annular elements 31 and the rod 28.

The rod 28 is internally hollow and has radial holes 39 for connection to its interior at the region 33.

It should also be noted that the loose end of the rod 28, which is closed at its tip, also has radial holes 42 that can move, together with the rod, between a position that lies inside a bushing 43 of the cylindrical element 27 and a position that lies outside it.

The duct 24 is connected to the inside of the third region 24, whereas the duct 25 is connected to the inside of the first region 32.

A duct 44, provided with a filter 45 and a pump 46, is placed between the second region 33 and the sixth region 37.

A duct 47 is connected to the fourth region 35 and to the bottom of the hopper 10, whereas a duct 48, provided with a filter 49, is connected to the fifth region 36 and leads into the upper region of said hopper 10.

The seventh region 38 has holes 50 for connection to the atmosphere.

As regards the operation of the dehumidifier, in a first step the distribution unit 26 has its shutters 29 arranged so as to mutually connect the regions 32 and 33, the regions 34 and 35, and the regions 36 and 37.

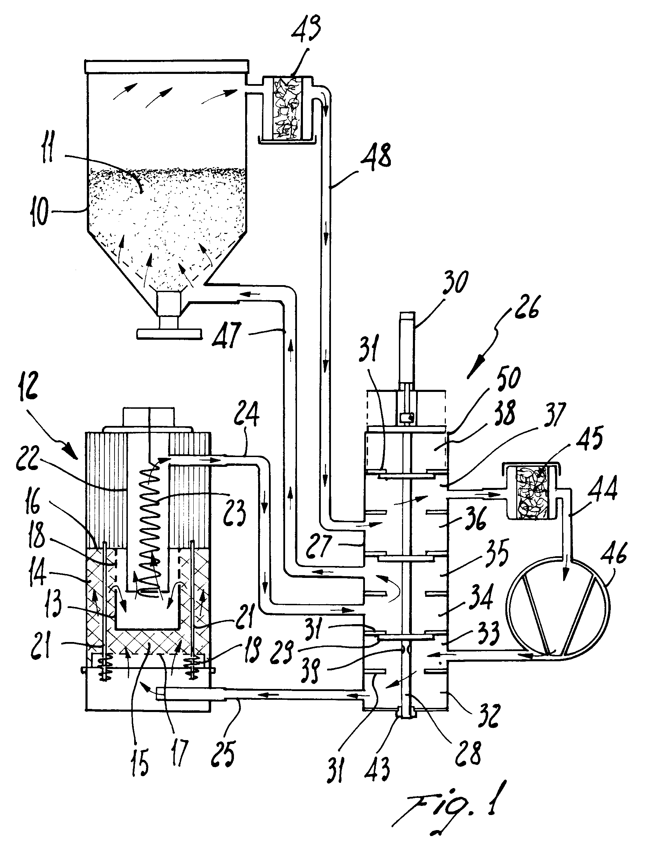

In this arrangement, illustrated in figure 1, actual dehumidification occurs and air is circulated in the direction indicated by the arrows.

The air passes through the granules 11 of the hopper 10 from the bottom upward, removing moisture, passes through the filter 49, where it leaves impurities such as dust and other matter, passes through the regions 36 and 37, and then through the filter 45, the pump 46, and into the container 12 through the regions 32 and 33.

Inside said container, it is conveyed into the annular portion 14 which is filled with molecular sieves to produce a preferential flow.

The sieves are supported and packed together by the grille 17 by means of the springs 19 in order to compensate for small changes in volume during the various steps of operation.

The dehumidified air exits through the annular grille 18 and passes inside the cup-like element 13, entering the tubular element 22 and then passing into the duct 24, into the regions 34 and 35 of the distribution unit 26, and then again into the hopper 10.

During its passage through the tubular element 22 the air is heated by the resistor 23.

The particular shape of the region containing the molecular sieves causes a considerable reduction in the forming of channels produced by preferential currents, since the slight pressurization to which said sieves are subjected distributes the air over the entire circumference.

The results in terms of dew point values is significant: (-50) - (-52).

In a second regeneration step, the shutters 29 of the distribution unit 26 are placed so as to connect the region 32 to the atmosphere through the holes 39 and 42, the regions 33 and 34, the regions 35 and 36, and the regions 37 and 38.

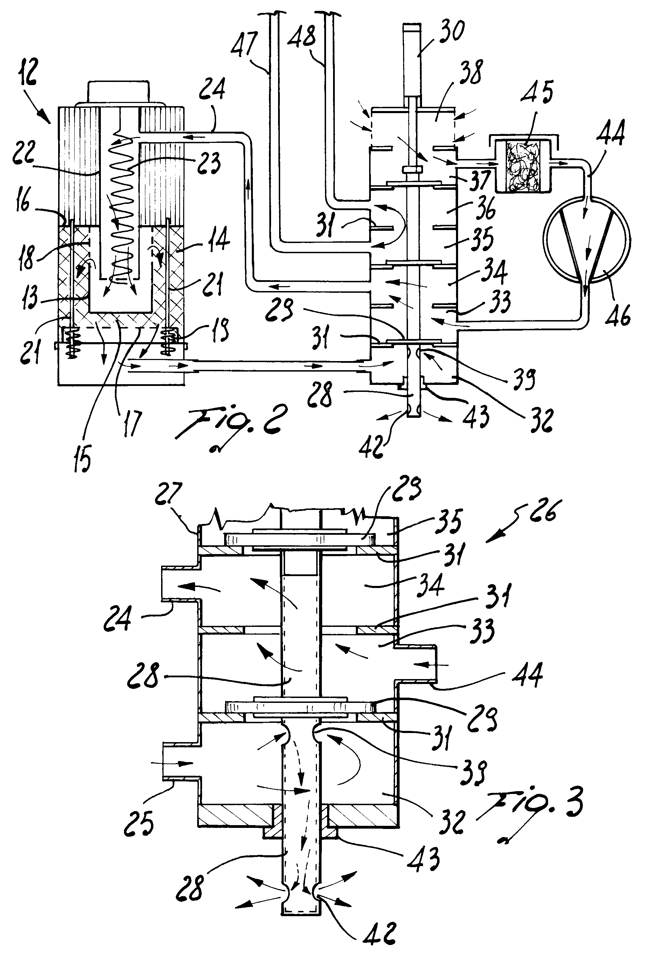

This step is shown in figures 2 and 3, and the configuration of the distribution unit 26 is obtained by actuating the pneumatic cylinder 30 by means of an appropriate electric valve.

The container 12 is thus crossed in the opposite direction by the air arriving from the atmosphere through the region 38, the region 37, the duct 44, the region 33, the region 34 and the duct 24.

The air is then discharged into the atmosphere from the region 32 through the holes 39 and 42.

During this step of operation, the electric resistor 23 is active and heats the air up to approximately 300 degrees Celsius.

The discharged air heats the rod 28, and the heat spreads to the regions 33 and 34, partially recovering the heat by means of the incoming air stream.

The maximum temperature that the sieves can reach is 350 degrees Celsius for a duration of ten minutes.

After this time, the resistor is disconnected and the cycle continues for approximately seven minutes by aspirating ambient air and discharging it into the environment so as to cool the sieves.

Once the regeneration step has ended, the distribution unit is returned to its previous configuration and the process continues.

The cycle is repeated after approximately ninety minutes.

The dew point achieved is on the average approximately -40 degrees Celsius.

In practice it has been observed that the intended aim and objects of the present invention have been achieved.

The invention thus conceived is susceptible to numerous modifications and variations, all of which are within the scope of the inventive concept.

All the details may furthermore be replaced with other technically equivalent elements.

In practice, the materials employed, so long as they are compatible with the contingent use, as well as the dimensions, may be any according to the requirements.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. Dehumidifier for plastic materials in granules, comprising a container (12) for molecular sieves through which the moist air arriving from a container (10) of plastic granules (11) must pass, characterized in that said molecular sieves are arranged along a ring (14) through which the air flows axially.

2. Dehumidifier according to claim 1, characterized in that said molecular sieve container coaxially contains a cup-like element (13) that forms said annular ring (14) filled with molecular sieves.

3. Dehumidifier according to claim 2, characterized in that said molecular sieves are also arranged at the bottom (15) of said cup-like element.

4. Dehumidifier according to one or more of the preceding claims, characterized in that the region (14,15) filled with said annular sieves is delimited by an annular partition (16) at the top and by a grille (17) at the bottom, an axially arranged annular grille (18) being located between the upper edge of said cup-like element and said annular partition.

5. Dehumidifier according to claim 4, characterized in that said bottom grille (17) is pushed by springs (19) so as to compress said molecular sieves and is guided by rods (21) that pass through the region (14,15) of said molecular sieves and are fixed to said annular partition (16).

6. Dehumidifier according to one or more of the preceding claims, characterized in that a coaxial tubular element (22) extends inside said cup-like element (13) and contains an appropriately powered electric resistor (23).

7. Dehumidifier according to claim 6, characterized in that the inside of said tubular element that contains said resistor and the inside of the bottom of said container are connected to ducts (24,25) for the passage of the air being processed.

8. Dehumidifier according to one or more of the preceding claims, characterized in that a distribution unit (26) is arranged between said hopper (10) and said container (12) of molecular sieves and comprises a tubular element (27) which is closed at its ends and in which a rod (28) is arranged axially, said rod supporting spaced disk-like shutters (29) and being associated with a pneumatic actuation cylinder (30), each one of said shutters being movable between pairs of annular elements (31) that are fixed to the inner wall of said tubular element (27) and divide said tubular element into regions (32-38).

9. Dehumidifier according to claim 8, characterized in that said regions (32-38) into which said tubular element is divided are seven.

10. Dehumidifier according to one or more of the preceding claims, characterized in that said rod (28) is internally hollow and has, at a first end region of said distribution unit, radial holes (39) for connection to the inside of said rod, the loose end of said rod, which is closed at its tip, being also provided with radial holes (42) that can move with it between a position that lies inside a bushing (43) or equivalent bush of said tubular element and a position that lies outside it.

11. Dehumidifier according to one or more of the preceding claims, characterized in that the seventh region (38) is provided with holes (50) for connection to the atmosphere.

12. Dehumidifier according to one or more of the preceding claims, characterized in that the bottom of said container (12) of molecular sieves is connected to said first region (32) of said distribution unit by means of a duct (25).

13. Dehumidifier according to one or more of the preceding claims, characterized in that said tubular element (22) that contains said resistor is connected to the third region (34) of said distribution unit by means of a duct (24).

14. Dehumidifier according to one or more of the preceding claims, characterized in that a duct (44) provided with a filter (45) and a pump (46) is arranged between the second region (33) and the sixth region (37) of said distribution unit (26).

15. Dehumidifier according to one or more of the preceding claims, characterized in that the bottom of said hopper (10) is connected to said fourth region (35) by means of a duct (47).

16. Dehumidifier according to one or more of the preceding claims, characterized in that a duct (48) provided with a filter (49) is connected to the fifth region (36) of said distribution unit and leads into the upper region of said hopper (10).

17. Dehumidifier according to one or more of the preceding claims, characterized in that in a first configuration of said distribution unit the first region (32) is connected to the second region (33), the third region (34) is connected to the fourth region (35), and the fifth region (36) is connected to the sixth region (37).

18. Dehumidifier according to one or more of the preceding claims, characterized in that in a second configuration of said distribution unit the second region (33) is connected to the third region (34), the fourth region (35) is connected to the fifth region (36), the sixth region (37) is connected to the seventh region (38), and the first region (32) is connected to the atmosphere.
